# EUROPEAN PATENT APPLICATION

(11) **EP 2 037 635 A1**
(43) Date of publication of application: **18.03.2009**
(21) Application number: 07116366.1
(22) Date of filing: 13.09.2007
(51) Int. Cl.: H04L 12/56

(54) **Method for managing network resources in a network and network resource management apparatus**

(71) Applicant: Deutsche Thomson OHG, 30625 Hannover (DE)
(72) Inventor: Kubsch, Stefan, 31559, Hohnhorst (DE); Aust, Andreas, 30177, Hannover (DE); Brocke, Jens, 30880, Laatzen (DE); Gläser, Frank, 30163, Hannover (DE); Köhler, Ralf, 30455, Hannover (DE); Siemens, Eduard, 31319, Sehnde (DE)
(74) Representative: Schäferjohann, Volker

(57) **Abstract**

The invention relates to a method for managing network resources in a network with network components and a resource manager (1) and a network resource management apparatus (1), the method comprising the following steps: transmitting a resource demand message (3) containing resource demand information by a requesting network component (B) to the resource manager (1); creating logged information by the resource manager (1) on the basis of the resource demand information; determining that sufficient network resources corresponding to the logged information have become available; and transmitting a resource notification (5) to the requesting network component (B) by the resource manager (1) in a non-broadcast mode, wherein the resource notification (5) indicates the availability of the sufficient network resources.

## Description

The invention relates to a method for managing network resources in a network, and a network resource management apparatus.

### Background of the Invention

In a communication network, network components are connected via communication links and usually share network resources. One important network resource is for example the bandwidth used for communication between two network components. Due to limited availability of communication bandwidth, communication networks need means for managing the allocation of the available bandwidth for the different communication links between network components. Other limited resources in a network besides bandwidth may relate to other communication quality parameters such as jitter and delay.

Known resource management procedures are for example implemented in a two-bit differentiated services architecture for the internet described in the document RFC 2638 (RFC - Request for Comments) and the Integration of Resource Management and Session Initiation Protocol (SIP) described in the document RFC 3312.

Session Initiation Protocol (SIP) defines a precondition framework (see RFC 3312) that allows defining quality parameters for a session. The SIP session is blocked until all preconditions are met, at which point the session is resumed. If a precondition can't be satisfied, the connection is ultimately rejected after a timeout. An originator of a session request will not be notified about resources becoming available at a later point in time.

Another similar feature, implemented within the Integrated Services Digital Network (ISDN) of Deutsche Telekom, is the "Call Completion on Busy Subscriber" (CCBS) method. Hereby, the call establishment (here it means the reservation request of network resources, including terminating equipment at the termination point) is postponed to the time when the terminating point becomes free. According to CCBS, the local exchange of the "B-user" (means the termination point of a call), when it receives a connection request on a busy terminating point, stores the address of the originator of the connection request and calls the originator back as soon as the termination adaptor (TA) of the B-user terminates the present connection. However, if network resources between the originator ("A-user") and the termination point are unavailable, the CCBS feature will not work.

Thus, reservation protocols such as RSVP (Resource reSerVation Protocol) only allow reserving network bandwidth presently available. If the reservation fails, there are no mechanisms defined to handle this situation. Therefore, if a resource allocation inquiry of a requesting network component is rejected due to insufficient resources being available at the time of the inquiry, the requesting network component will have to continue sending such inquiries until sufficient resources become available. Furthermore, there is the danger that between the time when further resources become available and the time when the requesting network sends out its further inquiries, a different network component requests and obtains these resources. This leads to a situation, wherein the network components compete for the availability of resources, also called a race condition.

EP 0 986 216 A2 discloses a method for bandwidth management in a transmission system. According to the known method, a bandwidth manager receives bandwidth allocation requests from communication apparatuses. The bandwidth manager further maintains a resource management table, containing information about the requested and the allocated bandwidth for each communication apparatus in the transmission system. When free bandwidth is increased, the bandwidth manager notifies all the communication apparatuses by broadcast.

### The Invention

It is an objective of the invention to provide a method and an apparatus for efficiently managing network resources.

The objective is met by a method for managing network resources in a network according to independent claim 1 and a network resource management apparatus according to independent claim 11.

According to one aspect of the invention, a method for managing network resources in a network with network components and a resource manager is provided, the method comprising the following steps: transmitting a resource demand message containing resource demand information by a requesting network component to the resource manager; creating logged information by the resource manager on the basis of the resource demand information; determining that sufficient network resources corresponding to the logged information have become available; and transmitting a resource notification to the requesting network component by the resource manager in a non-broadcast mode, wherein the resource notification indicates the availability of the sufficient network resources.

According to a further aspect of the invention, a network resource management apparatus is provided, comprising: receiving means configured to receive a resource demand message transmitted by a requesting network component and containing resource demand information; logging means for creating logged information on the basis of the resource demand information; network resource monitoring means configured to monitor network resources and determine that sufficient network resources corresponding to the logged information have become available; allocation means configured to allocate network resources for the requesting network component; and transmitting means configured to transmit a resource notification to the requesting network component, which indicates the availability of the sufficient network resources.

In other words, the requesting network component, for example a host, can register a demand for network resources with the resource manager. When those resources become available, the requesting network component will be informed by the resource manager. Compared to other resource management methods, this method has the advantage that resource allocation can be performed selectively, while avoiding the competition situation or race condition as described above. Such a notification mechanism thus allows using the available network resources more efficiently, for example for prioritized data transmission.

The logged information may be created by entering information regarding the type, the size, and / or other parameters of the resources demanded by the requesting network component as well as identifiers for the requesting network component for example into a demand table. Further entries into the demand table may include priority information. Thus the resources that become available may be allocated to different requesting network components on the basis of the order the resource demands have been transmitted and / or in view of their priorities.

Transmitting the resource notification in a non-broadcast mode has the additional advantage that at least some of the network components are relieved in terms of data handling. This is in contrast to a transmission of the resource notification in broadcast mode, which would force all network components to analyze the resource notification to determine, whether it has any significance for them. Furthermore, communication on the network connections is reduced, thus rendering the method more resource efficient.

An advantageous embodiment of the invention comprises the steps of transmitting a request resource allocation inquiry to the resource manager by the requesting network component together with or prior to the transmission of the resource demand message, determining that network resources corresponding to the resource allocation inquiry are not available, and transmitting an allocation reject notification by the resource manager to the requesting network component. In this embodiment, the requesting network component first tries to obtain the desired resources by way of an ordinary inquiry. Only if the inquiry is rejected due to lack of availability of sufficient resources, the resource demand message is sent in order to register with the resource manager for obtaining the next available resource opening. Time may be saved and unnecessary communication may be avoided by further combining the request resource allocation inquiry with the resource demand message.

A further development of the invention comprises the steps of transmitting a further request resource allocation inquiry to the resource manager by the requesting network component as a response to the resource notification and allocating network resources corresponding to the further request resource allocation inquiry. This has the advantage that the requesting network component has full control over whether the resources are to be allocated for it, once they become available.

A favourable enhancement of the invention comprises the step of allocating network resources corresponding to the logged information after determining that sufficient network resources have become available. This is an alternative to the previously described embodiment and has the advantage that there is no need for the requesting network component to send a separate message to actually initiate the allocation procedure. The resource notification by the resource manager may in this case include information regarding the allocated resources.

A favourable embodiment of the invention further comprises the step of reserving network resources corresponding to the logged information to be allocated on demand for the requesting network component, after determining that sufficient network resources have become available. This has the advantage that the reserved network resources may not be allocated to other network components before the requesting network component had a chance to obtain them. It is also possible that freed resources be reserved for the requesting network component, once they become available until they reach the sufficient amount. Only once the reserved resources are sufficient to satisfy the demand of the requesting network component, may the notification be sent.

In a further embodiment of the invention, the reserved or allocated network resources are released after a certain time-out period if no further request resource allocation inquiry is transmitted to the resource manager by the requesting network component as a response to the resource notification. This has the advantage that the reserved or allocated network resources are not held occupied and therefore unavailable to other network components indefinitely, but may instead be used otherwise to improve the efficiency of the system.

An advantageous embodiment of the invention comprises the step of reserving or allocating network resources corresponding to a part of the resource demand information, whereby the logged information created on the basis of the resource demand information by the resource manager corresponds to a remaining part of the resource demand information. In other words, the resource needs of the requesting component are satisfied as far as network resources are available at the time, whereas additional resources may be allocated for the requesting network component as they become available.

In a further development of the invention, at least one message selected from the following group of messages is transmitted between the requesting network component and the resource manager in a unicast mode: the resource demand message, the resource notification, the request resource allocation inquiry, the allocation reject notification, and the further request resource allocation inquiry. Compared to transmissions in multicast or even broadcast, this has the advantage of minimizing the amount of communication. Furthermore, this way it is assured that the information regarding the availability of further network resources becomes available only to the requesting network components, for which it is intended. This is of particular importance in larger networks such as Wide Area Networks (WAN).

In a favourable enhancement of the invention, the reserved or allocated network resources comprise one or multiple of the following group: bandwidth, delay, and jitter. Other parameters which are of limited availability in a network environment may also be managed according to the herein described method.

In a favourable embodiment of the invention the network is a Wide Area Network.

### Drawing

In the following, the invention will be described by means of advantageous embodiments with reference to figures of a drawing. Herein:
- Fig. 1: shows a schematic depiction of a network comprising multiple network components and a resource manager; and
- Fig. 2: shows a diagram illustrating a sequence of messages between network components and a resource manager.

### Embodiments

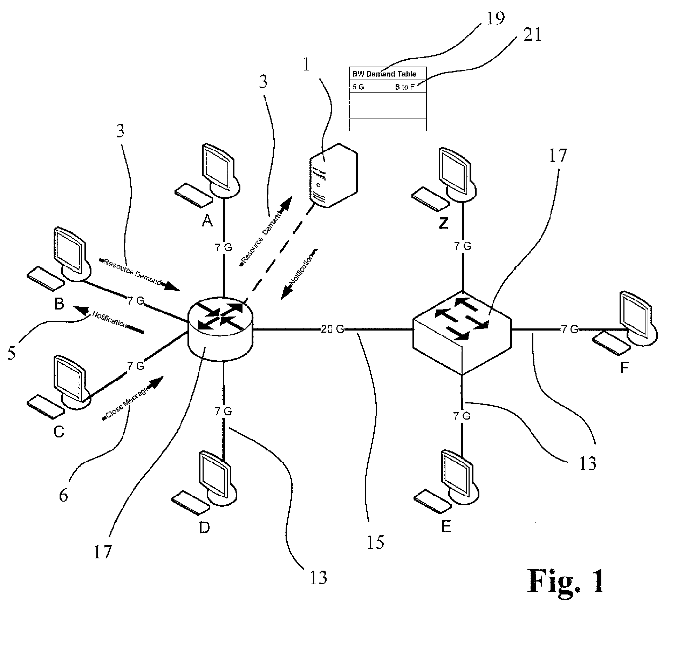

Fig. 1 depicts a schematic of a network, for example a local area network (LAN), with several network components Z, A...F, which are connected to the network via network connections 13. The network further comprises intermediate components 17 such as routers and switches, which can be configured to create communication links between the network components Z, A...F. The intermediate components 17 are connected together via a further network connection 15.

In the embodiment described in Fig. 1, the network connections 13 have each a bandwidth of 7 Gbit/s (in Fig. 1, G is short for the unit Gigabits per second or Gbit/s), meaning that they can each support communication with a maximum bandwidth of 7 Gbit/s, while on the further network connection 15 between the intermediate components 17 the maximum bandwidth is 20 Gbit/s.

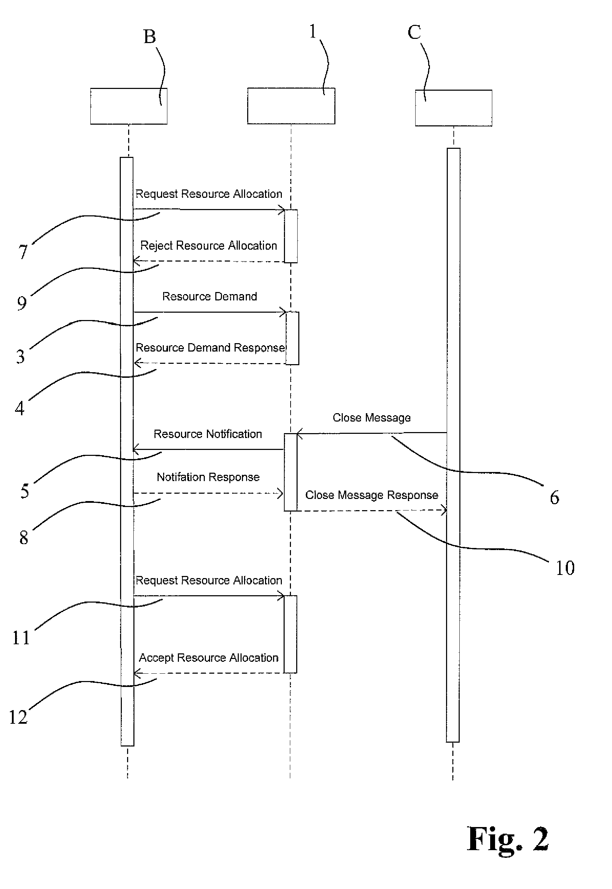

Furthermore, a resource manager 1 is configured to influence (as indicated by a broken line) at least one of the intermediate components 17 in order to facilitate and manage the creation and termination of communication links between the network components Z, A...F. As an example, in the Fig. 1 and 2, the resource that is managed is the bandwidth used for the different communication links. Therefore, the resource manager 1, which may be a Quality of Service (QoS) manager, is responsible for controlling resources and quality of service, in particular for allocating bandwidth on the different network connections 13, 15, according to the needs and demands of the network components Z, A...F.

Fig. 1 further depicts schematically a bandwidth demand table 19, which is used to store the logged information corresponding to resource demand information sent by a requesting network component B to the resource manager 1. Such logged information is provided as an entry 21 in the bandwidth demand table 19, which itself may be stored in a memory device connected to the resource manager 1. Along with the logged information, a message identifier may be used to distinguish new demands from ones that have been postponed and / or already tended to.

As shown with the help of arrows in Fig. 1, the requesting network component B sends a resource demand message 3 to the resource manager 1 asking for bandwidth allocation for a communication link between the requesting network component B and a further component F, for which 5 Gbit/s of bandwidth are desired. The resource manager 1 creates a corresponding entry 21 in the bandwidth demand table 19. Once another network component C decides to close its own communication link with yet another component (not shown), it transmits a close message 6. By way of the close message 6 the resource manager 1 becomes aware that additional bandwidth has become available. The resource manager 1 therefore checks whether the additional bandwidth is sufficient to satisfy one or multiple of the demands according to the entries 21 in the bandwidth demand table 19. In this case, a notification message 5 is sent to the corresponding requesting network component B.

Fig. 2 shows a diagram illustrating a sequence of messages between the different components of the network of Fig. 1.
Fig. 2 illustrates thus the method described above more completely and in more detail. Herein, the solid arrows indicate messages sent between the requesting network component B, the resource manager 1, and the other network component C, whereas the broken line arrows indicate communication transmitted as a response to these messages.

First, a request resource allocation inquiry 7 is sent by the requesting network component B to the resource manager 1. Because no sufficient bandwidth is available at the time of the request resource allocation inquiry 7, the resource manager 1 dispatches an allocation reject notification 9 to the requesting network component B. In order to register its resource requirements with the resource manager 1, the requesting network component B then transmits a resource demand message 3, which contains resource demand information. The resource demand information comprises information regarding the kind, quality and / or size of the resources desired by the requesting network component B. The resource demand message 3 may also contain priority information indicating the importance of the resource demand.

In order to acknowledge the safe receipt of the resource demand message 3, the resource manager 1 responds with a resource demand response 4. The resource demand response 4 may contain additional information, e.g. regarding the prioritizing of the requesting network component's B resource demand and estimates of the time the requesting network component B is expected to have to wait for sufficient resources to become available.

Meanwhile, the other network component C is occupying some bandwidth for its own communication. Once it no longer requires that bandwidth, it sends a close message 6 to the resource manager 1, as depicted in Fig. 2. The resource manager 1, which is either monitoring the available bandwidth constantly or realizes that there is additional bandwidth available after receiving the close message 6, compares the now available bandwidth with the bandwidth demanded by the requesting network component B as indicated by the entry 21 in the bandwidth demand table 19.

Once it decides that the now available bandwidth is sufficient to satisfy the demand, the resource manager 1 transmits a resource notification 5 to the requesting network component B, indicating that the latter may proceed requesting the allocation of bandwidth. As an acknowledgment, the requesting network component B transmits back a notification response 8. Furthermore, the resource manager 1 acknowledges the close message 6 towards the other network component C via transmitting a close message response 10.

In order to ensure that the requesting network component B has enough time for obtaining the bandwidth it demanded, the resource manager 1 may reserve the bandwidth corresponding to the resource demand 3. Note that on the other hand, the resource manager 1 may reject the attempt of the requesting network component B to obtain resources, if for example the required resources are pre-allocated or reserved by others of the network components Z, A, C...F.

Then, the requesting network component B transmits a further request resource allocation inquiry 11 in order to request that bandwidth be allocated for it by the resource manager 1. Since the requested bandwidth can now be allocated successfully, the resource manager 1 will proceed with the allocation and transmit an allocation accept notification 12 as a confirmation to the requesting network component B. The requesting network component B may now utilize the allocated bandwidth and start a data transmission with the requested Quality of Service.

As an alternative, the resource manager 1 may already allocate the necessary bandwidth for the requesting network component B before sending the resource notification 5 or as a reaction to the notification response 8. In this case, the resource notification 5 may function as a trigger for the requesting network component B to establish a desired communication link and start a data transmission.

Finally, the logged information relating to the resource demand of the requesting network component B, namely the entry 21 in the bandwidth demand table 19, may be removed.

In a variation of the method, the requesting network component B could specify in its resource demand message 3 how much resources are really reasonable for an application it intends to run. Or it may specify the intended application such that the resource manager 1 may use an algorithm to determine a reasonable resource size. In this case, the resource manager 1 is able to allocate or reserve the available resources best suited for the intended application. The allocation of the resource may then be extended up to the desired extent at a later time upon further resources becoming available.

As an example, the requesting network component B may request 3 Gbit/s of bandwidth for providing 2 x 2k data streams (wherein 2k characterizes the resolution of image information obtainable with the data stream, each 2k stream needs 1.5 Gbit/s), but the resource manager 1 can only offer 2.5 Gbit/s of bandwidth. In this case, it is often more efficient from a resource management point of view for the requesting network component B to obtain only 1.5 Gbit/s and work with one data stream instead of two. Thus, the resource manager 1 allocates 1.5 Gbit/s of bandwidth for the requesting network component B, while utilizing the remaining 1 Gbit/s of bandwidth otherwise. In addition, a further entry can be added to the bandwidth demand table 19, indicating the further 1.5 Gbit/s of bandwidth demanded by the requesting network component B, which may be allocated at a later time, once more bandwidth is available.

The method described above can for example be used in post production facilities, where digital film is transferred with high data rates within the facility network or between different facilities. This applies in particular to real-time tasks where no exact beginning of the task is required, or in other words, the task should start immediately when resources become available. For example, when film reels are scanned at one point of the facility network, the scanned data should be transported in real-time over the network to a Storage Area Network (SAN) at a different place within the facility.
Furthermore, the above described method can be used in every network system where limited resources are managed, for example in Local Area Networks, Wide Area Networks, Internet Protocol networks, which are based on different network technologies like Infiniband or Ethernet.

The features of the invention as disclosed in the above description, in the claims and in the drawing may be of importance for the implementation of the various embodiments of the invention both individually and in any desired combination.

## Claims

1. Method for managing network resources in a network with network components and a resource manager (1), the method comprising the following steps:
- transmitting a resource demand message (3) containing resource demand information by a requesting network component (B) to the resource manager (1);
- creating logged information by the resource manager (1) on the basis of the resource demand information;
- determining that sufficient network resources corresponding to the logged information have become available; and
- transmitting a resource notification (5) to the requesting network component (B) by the resource manager (1) in a non-broadcast mode, wherein the resource notification (5) indicates the availability of the sufficient network resources.

2. Method according to claim 1, **characterized by** the steps of transmitting a request resource allocation inquiry (7) to the resource manager (1) by the requesting network component (B) together with or prior to the transmission of the resource demand message (3), determining that network resources corresponding to the resource allocation inquiry (7) are not available, and transmitting an allocation reject notification (9) by the resource manager (1) to the requesting network component (B).

3. Method according to claim 1 or 2, **characterized by** the steps of transmitting a further request resource allocation inquiry (11) to the resource manager (1) by the requesting network component (B) as a response to the resource notification (5) and allocating network resources corresponding to the further request resource allocation inquiry (11).

4. Method according to claim 1 or 2, **characterized by** the step of allocating network resources corresponding to the logged information after determining that sufficient network resources have become available.

5. Method according to one of the claims 1 to 3, **characterized by** the step of reserving network resources corresponding to the logged information to be allocated on demand for the requesting network component (B), after determining that sufficient network resources have become available.

6. Method according to claim 4 or 5, **characterized in that** the reserved or allocated network resources are released after a certain time-out period if no further request resource allocation inquiry (11) is transmitted to the resource manager (1) by the requesting network component (B) as a response to the resource notification (5).

7. Method according to one of the previous claims, **characterized by** the step of reserving or allocating network resources corresponding to a part of the resource demand information, whereby the logged information created on the basis of the resource demand information by the resource manager (1) corresponds to a remaining part of the resource demand information.

8. Method according to one of the previous claims, **characterized in that** at least one message selected from the following group of messages is transmitted between the requesting network component (B) and the resource manager (1) in a unicast mode: the resource demand message (3), the resource notification (5), the request resource allocation inquiry (7), the allocation reject notification (9), and the further request resource allocation inquiry (11).

9. Method according to one of the previous claims, **characterized in that** the reserved or allocated network resources comprise one or multiple of the following group: bandwidth, delay, and jitter.

10. Method according to one of the previous claims, **characterized in that** the network is a Wide Area Network.

11. Network resource management apparatus (1), comprising:
- receiving means configured to receive a resource demand message (3) transmitted by a requesting network component (B) and containing resource demand information;
- logging means for creating logged information on the basis of the resource demand information;
- network resource monitoring means configured to monitor network resources and determine that sufficient network resources corresponding to the logged information have become available;
- allocation means configured to allocate network resources for the requesting network component (B); and
- transmitting means configured to transmit a resource notification (5) to the requesting network component (B) in a non-broadcast mode, which indicates the availability of the sufficient network resources.
